# EUROPEAN PATENT APPLICATION

(11) **EP 4 787 735 A1**
(43) Date of publication of application: **05.08.2026**
(21) Application number: 24936208.8
(22) Date of filing: 28.11.2024
(51) Int. Cl.: H04B 7/185, H04W 24/08, H04W 24/10

(54) **INFORMATION TRANSMISSION METHOD AND APPARATUS, AND DEVICE, SYSTEM, CHIP AND STORAGE MEDIUM**

(71) Applicant: China Satellite Network Innovation Co., Ltd, Beijing 100029 (CN)
(72) Inventor: QI, Dongqing, Beijing 100029 (CN); MANG, Ge, Beijing 100029 (CN); WANG, Gaojian, Beijing 100029 (CN); WANG, Niwei, Beijing 100029 (CN); ZHANG, Yang, Beijing 100029 (CN)
(74) Representative: advotec.
(86) International application number: PCT/CN2024/135404
(87) International publication number: WO 2026/112916

(57) **Abstract**

The present disclosure provides a method and an apparatus for information transmission, a device, a system, a chip and a storage medium, wherein the method comprises: sending first time indication information to a terminal in a first beam footprint, wherein the first time indication information indicates time information for the terminal to receive first neighboring cell configuration information of a first cell, the first beam footprint is within the first cell, and the first neighboring cell configuration information is used for the terminal to perform a neighboring cell measurement, thereby saving the transmission power and the channel resource of a network device.

## Description

### FIELD

The present disclosure relates to the field of wireless communication technologies, and in particular relates to a method and an apparatus for information transmission, a device, a system, a chip and a storage medium.

### BACKGROUND

In a wireless communication system, a network device may send neighboring cell configuration information to terminals in respective areas within a coverage cell, such that the terminals perform a neighboring cell measurement according to the neighboring cell configuration information. For sending of the neighboring cell configuration information, it is necessary to occupy a new radio resource, and how to save the new radio resource occupied needs to be considered.

### SUMMARY

Embodiments of the present disclosure provide a method and an apparatus for information transmission, a device, a system, a chip, and a storage medium, capable of solving the technical problem of higher resource consumption due to a manner that a network device sends configuration information of a neighboring cell.

According to a first aspect of embodiments of the present disclosure, there is provided a method for information transmission. The method is applied to a network device and includes: sending first time indication information to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

According to a second aspect of embodiments of the present disclosure, there is provided a method for information transmission. The method is applied to a terminal and includes: receiving first time indication information sent by a network device, in which the first time indication information indicates time information for the terminal to receive first neighboring cell configuration information of a first cell, and the terminal is in a first beam footprint within the first cell.

According to a third aspect of embodiments of the present disclosure, there is provided an apparatus for transmitting information. The apparatus is applied to a network device, and includes: a transceiver module configured to send first time indication information to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

According to a fourth aspect of embodiments of the present disclosure, there is provided an apparatus for transmitting information. The apparatus is applied to a terminal, and includes: a transceiver module configured to receive first time indication information sent by a network device, in which the first time indication information indicates time information for the terminal to receive first neighboring cell configuration information of a first cell, and the terminal is in a first beam footprint within the first cell.

According to a fifth aspect of embodiments of the present disclosure, there is provided a communication device. The communication device includes: a memory, a processor, and a computer program stored on the memory and executable on the processor, in which the processor, when executing the computer program, implements the method for information transmission described in embodiments of the present disclosure.

According to a sixth aspect of embodiments of the present disclosure, there is provided a communication system. The communication system includes a network device and a terminal. The network device is configured to perform the method described in the first aspect of embodiments of the present disclosure, and the terminal is configured to perform the method described in the second aspect of embodiments of the present disclosure.

According to a seventh aspect of embodiments of the present disclosure, there is provided a chip. The chip includes one or more interface circuits and one or more processors, in which the interface circuit is configured to receive a signal from a memory of a communication device and send the signal received to the processor, and the signal received includes computer instructions stored in the memory that, when executed by the processor, enable the communication device to perform the method for transmitting information described in embodiments of the present disclosure.

According to an eighth aspect of embodiments of the present disclosure, there is provided a computer-readable storage medium having computer-executable instructions stored therein that, when executed by a processor, implement the method for transmitting information described in embodiments of the present disclosure.

According to a ninth aspect of embodiments of the present disclosure, there is provided a computer program product. The computer program product includes a computer program that, when executed by a processor, implements the method for transmitting information described in embodiments of the present disclosure.

The technical solution provided in the embodiments of the present disclosure may have at least the following beneficial effects.

In a case where the terminal in the first beam footprint does not need to perform the neighboring cell measurement, the network device may send the first time indication information, which indicates the time information for the terminal to receive the first neighboring cell configuration information, instead of sending the first neighboring cell configuration information for performing the neighboring cell measurement to the terminal. Since consumption for sending power and a channel resource of the network device by sending the first time indication information is greatly reduced compared with sending the first neighboring cell configuration information, the transmission power and the channel resources of the network device may be saved.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
FIG. 1 is a schematic diagram illustrating an architecture of a wireless communication system according to an embodiment of the present disclosure.
FIG. 2 is a schematic diagram illustrating a single-satellite single-cell network system according to an embodiment of the present disclosure.
FIG. 3 is a schematic diagram illustrating a beam footprint distribution according to an embodiment of the present disclosure.
FIG. 4 is a flowchart illustrating a method for information transmission according to an embodiment of the present disclosure.
FIG. 5 is a schematic diagram illustrating a relative position change of a beam footprint A in a first cell during movement of the first cell according to an embodiment of the present disclosure.
FIG. 6 is a schematic diagram illustrating another beam footprint distribution according to an embodiment of the present disclosure.
FIG. 7 is a flowchart illustrating another method for information transmission according to an embodiment of the present disclosure.
FIG. 8 is a flowchart illustrating another method for information transmission according to an embodiment of the present disclosure.
FIG. 9 is a schematic diagram illustrating an interaction between an on-board base station and a terminal for information transmission.
FIG. 10 is a flowchart illustrating another method for information transmission according to an embodiment of the present disclosure.
FIG. 11 is a flowchart illustrating another method for information transmission according to an embodiment of the present disclosure.
FIG. 12 is a schematic diagram illustrating a structure of an apparatus for information transmission according to an embodiment of the present disclosure.
FIG. 13 is a schematic diagram illustrating a structure of another apparatus for information transmission according to an embodiment of the present disclosure.
FIG. 14 is a schematic diagram illustrating a structure of another apparatus for information transmission according to an embodiment of the present disclosure.
FIG. 15 is a schematic diagram illustrating a structure of another apparatus for information transmission according to an embodiment of the present disclosure.
FIG. 16 is a block diagram illustrating a communication device for implementing a method for information transmission according to an illustrative embodiment.
FIG. 17 is a schematic diagram illustrating a structure of a chip according to an illustrative embodiment.

### DETAILED DESCRIPTION

Embodiments of the present disclosure will be described in detail below, examples of which are illustrated in the drawings. The same or similar elements and the elements having the same or similar functions are denoted by like reference numerals throughout the descriptions. Embodiments described herein with reference to drawings are explanatory, serve to explain the present disclosure, and should not be construed to limit embodiments of the present disclosure.

In order to better understand embodiments of the present disclosure, a communication system to which the embodiments of the present disclosure are applied is first described below.

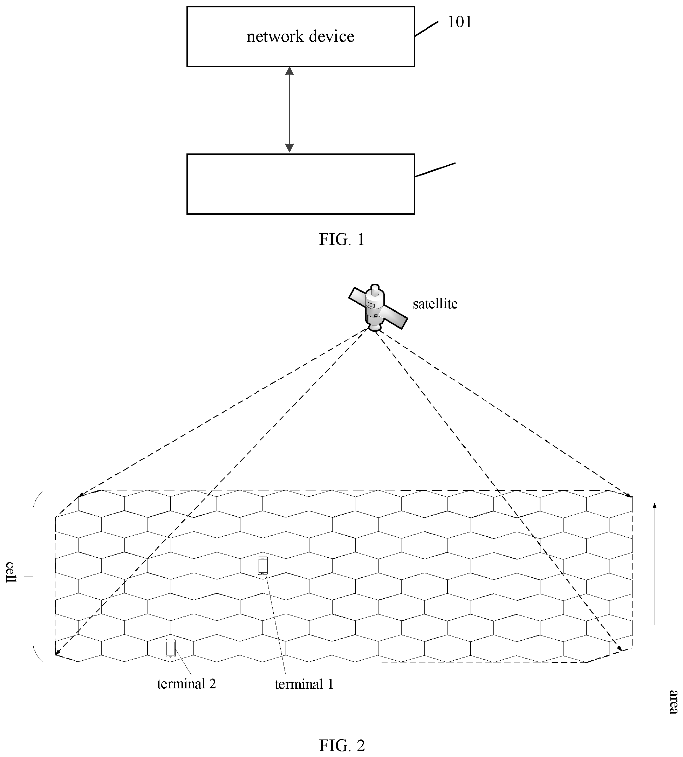

Referring to FIG. 1, FIG. 1 is a schematic diagram illustrating an architecture of a communication system according to embodiments of the present disclosure. The communication system may include, but is not limited to, a network device and a terminal. The number and form of the devices shown in FIG. 1 are merely used as an example, and do not constitute a limitation on embodiments of the present disclosure. In practical applications, the communication system may include two or more network devices and two or more terminals. The communication system shown in FIG. 1 is illustrated as an example where one network device 101 and one terminal 102 are included.

The network device 101 in embodiments of the present disclosure is an entity for transmitting or receiving signals.

The network device 101 is, for example, a node or a device that connects a terminal to a wireless network, and may include at least one of a satellite, a base station mounted on the satellite (referred to as an on-board base station), an evolved nodeB (eNB) in a fifth-generation (5G) communication system, a next generation eNB (ng-eNB), a next generation nodeB (gNB), a home evolved nodeB (HNB), a home evolved nodeB (HeNB), a radio backhaul device, a radio network controller (BSC), a base transceiver station (BTS), a base band unit (BBU), a mobile switching center, a base station in a 6G communication system, an open base station (RAN), a cloud RAN, a base station in another communication system, and an access node in a Wi-Fi system, which is not limited in embodiments of the present disclosure.

The satellite may be a low earth orbit (LEO) satellite, a medium earth orbit (MEO) satellite, a geostationary earth orbit (GEO) satellite, or the like.

Embodiments of the present disclosure do not limit the specific technology and the specific device form used by the network device.

The terminal 102 in embodiments of the present disclosure refers to a processing apparatus for communicating with a network device within a coverage range of the network device. For example, the terminal may be an automobile having a wireless communication function, a smart automobile, a mobile phone, a wearable device, a pad, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc., which is not limited in embodiments of the present disclosure. Embodiments of the present disclosure do not limit the specific technology and the specific device form used by the terminal.

It may be understood that the communication system described in embodiments of the present disclosure is for a purpose of describing the technical solutions of embodiments of the present disclosure more clearly, and does not constitute a limitation on the technical solutions according to embodiments of the present disclosure. It may be understood by those skilled in the art that with the evolution of the system architecture and the emergence of new service scenarios, the technical solutions according to embodiments of the present disclosure are also applicable to similar technical problems.

In the wireless communication system described above, the network device may broadcast system information (SI) to an entire area covered by the network device. The system information is "cell specific" system information, that is, all locations and all terminals in a coverage range of an entire cell may receive the system information, and the contents of the system information received are the same. The system information includes configuration information of all neighboring cells of a cell covered by the network device, and the configuration information is configured for the terminal to perform a neighboring cell measurement. The neighboring cell are referred to as a neighbor cell. In a case where the terminal is in a central area of a cell coverage area, it is not necessary to perform the neighboring cell measurement. Therefore, this method for indiscriminately sending the configuration information of all neighboring cells to the coverage area may greatly increase a sending power consumption of the network device and waste a channel resource.

The neighboring cell configuration information included in the system information includes information related to a neighboring cell of a current cell covered by the network device. The information provides information of the neighboring cell to a terminal residing in the current cell, and is mainly used for a mobility management. The terminal uses the information to detect and measure the neighboring cell, to change to a new cell before the coverage of the current cell ends, thereby maintaining service continuity. The neighboring cell configuration information may include, for example, one or more of: cell reselection information related to the current cell; serving frequency information and intra-frequency neighboring cell information related to cell reselection; inter-frequency neighboring cell information of a new radio (NR) related to the cell reselection; a cell reselection related parameter and related carrier information of an evolved universal mobile telecommunications system (UMTS) terrestrial radio access network (E-UTRAN) related to the cell reselection; a non-terrestrial network (NTN) serving cell, or a neighboring cell satellite parameter, etc.

Hereinafter, with reference to FIG. 2, the problem of high sending power and channel resource consumption of a network device due to the above method for sending the neighboring cell configuration information may be illustrated as an example. It is noted that, in FIG. 2, a terminal being a mobile phone, the network device being a satellite, and a single-satellite single-cell network system are taken as an example. In FIG. 2, a dashed box represents a cell 1 that is an area covered by the satellite, and a direction of an arrow represents a moving direction, relative to the ground, of the cell 1 that is the area covered by the satellite. The cell 1 includes a plurality of beam footprints.

As shown in FIG. 2, in the related art, the satellite broadcasts system information to an entire area covered by the cell 1, and the system information includes configuration information of all neighboring cells adjacent to the cell 1, that is, in the entire area covered by the cell 1, terminals in all beam footprints may receive the configuration information of all neighboring cells sent by the satellite, and contents of information received by the terminals in various beam footprints are the same. However, due to a wide coverage, multiple beam footprints, and an inter-cell overlapping area being usually much smaller than the cell coverage area for a satellite network, a terminal 1 located within the cell 1, because of its long distance from the neighboring cell, cannot measure the neighboring cell, and has no need to change the cell at the current stage, while a terminal 2 at an edge of the cell 1, because of its close distance from the neighboring cell, has a need to receive the neighboring cell configuration information, to perform neighboring cell measurement and trigger reselection or handover.

That is, for the satellite network, in a case where the terminal is in a central area of the cell coverage area, there is no need to perform the neighboring cell measurement, and the inter-cell overlapping area is usually much smaller than the cell coverage area, thus, even if the terminal performs the neighboring cell measurement, the neighboring cell may not be measured. Furthermore, a beam of the satellite may provide a service for the coverage area in time division in a form of scanning, which has an inherently large broadcast overhead. Therefore, this method for sending the neighboring cell configuration information to the coverage area indiscriminately may greatly increase the sending power consumption of the satellite and waste the channel resource.

In order to save a sending power and a channel resource of a network device, embodiments of the present disclosure propose a method and an apparatus for information transmission, a communication device, a communication system, a chip, a computer-readable storage medium, and a computer program product.

In order to facilitate understanding, technical terms involved in embodiments of the present disclosure are first explained.

### First cell

The first cell is an area covered by the network device on the ground. The first cell may be divided into a plurality of beam footprints, and the network device may scan these beam footprints through beams to realize beam scanning. The first cell may be a cell moving relative to the ground.

### First beam footprint

The first beam footprint is an arbitrary beam footprint within the first cell, and a location of the first beam footprint relative to the ground may be constant.

### First neighboring cell configuration information

The first neighboring cell configuration information is sent by the network device to a terminal in the first beam footprint for the terminal within the first beam footprint to perform neighboring cell measurement. After receiving the first neighboring cell configuration information, the terminal within the first beam footprint may perform the neighboring cell measurement, uplink and downlink synchronization, reselection, handover and the like according to the first neighboring cell configuration information.

### Second beam footprint

The second beam footprint is an arbitrary beam footprint different from the first beam footprint within the first cell, and a location of the second beam footprint relative to the ground may be constant.

### Edge beam footprint and non-edge beam footprint

For each beam footprint within the first cell, it may be determined whether a terminal within the beam footprint needs to perform the neighboring cell measurement according to an adjacent situation of the beam footprint and the neighboring cell of the first cell, and then respective beam footprints within the first cell may be divided into the edge beam footprint and the non-edge beam footprint.

As an example, it may be understood that at a certain time point, for a beam footprint adjacent to any neighboring cell of the first cell among the beam footprints within the first cell, a terminal within the beam footprint may move to a certain neighboring cell at a next time point, or a certain neighboring cell may cover the beam footprint at the next time point with movement of the first cell, then the terminal in the beam footprint needs to have inter-cell mobility, and the terminal in the beam footprint needs to perform the neighboring cell measurement. Among the beam footprints in the first cell, a beam footprint separated by at least one beam footprint from any neighboring cell of the first cell does not involve inter-cell mobility, and the terminal in the beam footprint does not need to perform the neighboring cell measurement. Thus, among the beam footprints in the first cell, the beam footprint adjacent to any neighboring cell of the first cell may be referred to as the edge beam footprint; and among the beam footprints in the first cell, the beam footprint separated by the at least one beam footprint from any neighboring cell of the first cell is referred to as the non-edge beam footprint. That is, the edge beam footprint is adjacent to any neighboring cell of the first cell, and the non-edge beam footprint is separated by the at least one beam footprint from any neighboring cell of the first cell. One or more arbitrary neighboring cells simultaneously adjacent to the edge beam footprint may be present.

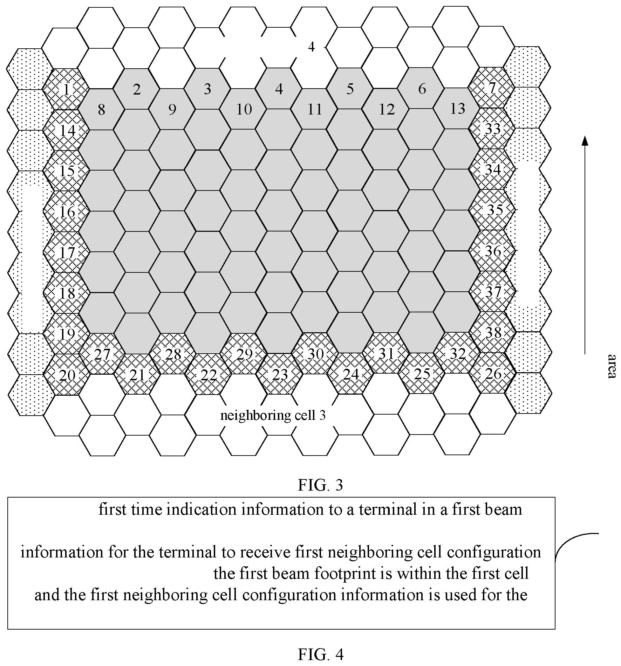

Hereinafter, with reference to FIG. 3, an edge beam footprint and a non-edge beam footprint are illustratively described by taking a network device as a satellite as an example. In FIG. 3, each hexagon represents one beam footprint, a gray-filled area and a grid-filled area represent first cells currently covered by the satellite, a direction of an arrow represents a moving direction of a satellite coverage area, namely, a first cell, relative to the ground, and the first cell is divided into a plurality of beam footprints.

Referring to FIG. 3, at a current time point corresponding to a beam footprint distribution shown in FIG. 3, neighboring cells of the first cell include a neighboring cell 1, a neighboring cell 2, a neighboring cell 3, and a neighboring cell 4. In FIG. 3, a dot-shaped filled area on a left side represents the neighboring cell 1, a dot-shaped filled area on a right side represents the neighboring cell 2, a white filled area on an upper side represents the neighboring cell 4, and a white filled area on a lower side represents the neighboring cell 3.

Referring to FIG. 3, among the beam footprints within the first cell, for beam footprints, namely, beam footprints 1-38, adjacent to at least one of the neighboring cell 1, the neighboring cell 2, the neighboring cell 3, and the neighboring cell 4, terminals within the beam footprints 1-38 need to perform neighboring cell measurement, and these beam footprints may be referred to as edge beam footprints. Among the beam footprints within the first cell, for beam footprints separated from the neighboring cell 1, the neighboring cell 2, the neighboring cell 3, and the neighboring cell 4 by at least one beam footprint, that is, the beam footprints filled in gray and not labeled in FIG. 3, terminals in the beam footprints do not need to perform neighboring cell measurement, and these beam footprints may be referred to as non-edge beam footprints.

As another example, for the beam footprint separated from any neighboring cell within the first cell by the at least one beam footprint among the beam footprints within the first cell are, the terminals in the beam footprint do not involve inter-cell mobility and do not need to perform the neighboring cell measurement, the beam footprint may be referred to as the non-edge beam footprint. Furthermore, it may be understood that, in a case where the first cell moves relative to the ground and has a moving speed much higher than a moving speed of a terminal on the ground, for example, in a case where the first cell is a cell covered by a low-orbit satellite, as the first cell moves, the terminal in the beam footprint covered by the first cell may not return to a cell that the terminal is in before being covered by the first cell, and thus among the beam footprints within the first cell, for a beam footprint adjacent to a source cell and separated by at least one beam footprint from any other neighboring cell, terminals in the beam footprint do not need to perform the neighboring cell measurement, and the beam footprint may also be referred to as the non-edge beam footprint. The source cell is a cell in which various beam footprints are located before being covered by the first cell among the neighboring cells of the first cell, and the other neighboring cell refers to a neighboring cell other than the source cell among the neighboring cells of the first cell. Among the beam footprints in the first cell, for a beam footprint adjacent to at least one other neighboring cell, terminals within the beam footprint involve inter-cell mobility and need to perform the neighboring cell measurement, and thus the beam footprint may be referred to as the edge beam footprint. That is, among the beam footprints in the first cell, any beam footprint may be referred to as the non-edge beam footprint if it satisfies any one of the following conditions that: the non-edge beam footprint is separated from any neighboring cell of the first cell by at least one beam footprint, or the non-edge beam footprint is adjacent to the source cell and is separated from any other neighboring cell by at least one beam footprint. Among the beam footprints in the first cell, any beam footprint may be referred to as the edge beam footprint if it satisfies the following conditions that: the edge beam footprint is adjacent to the at least one other neighboring cell.

Hereinafter, with continued reference to FIG. 3, the edge beam footprint and the non-edge beam footprint are illustratively described by taking the network device as the satellite as an example. Since a moving direction of the first cell is from bottom to top, the neighboring cell 4 is a cell in which various beam footprints in the first cell are located before being covered by the first cell, that is, the source cell. Other neighboring cells other than the source cell in the neighboring cells of the first cell include the neighboring cell 1, the neighboring cell 2, and the neighboring cell 3.

Referring to FIG. 3, among the beam footprints within the first cell, for beam footprints adjacent to the neighboring cell 4 and separated from the neighboring cell 1, the neighboring cell 2, and the neighboring cell 3 by at least one beam footprint, that is, beam footprints 2-6 and 8-13 in FIG. 3, and beam footprints separated from the neighboring cell 1, the neighboring cell 2, the neighboring cell 3, and the neighboring cell 4 by at least one beam footprint, that is, beam footprints filled in gray and not labeled in FIG. 3, terminals within these beam footprints do not need to perform the neighboring cell measurement, then these beam footprints may be referred to as the non-edge beam footprints. Among the beam footprints in the first cell, for beam footprints adjacent to at least one of the neighboring cell 1, the neighboring cell 2 and the neighboring cell 3, that is, beam footprints 1, 7 and 14-38, terminals within these beam footprints need to perform the neighboring cell measurement, and these beam footprints may be referred to as the edge beam footprints.

Based on this, in some possible embodiments, the non-edge beam footprint is separated by the at least one beam footprint from the at least one neighboring cell of the first cell. In other possible embodiments, the non-edge beam footprint is adjacent to the source cell. In other possible embodiments, the non-edge beam footprint is separated by the at least one beam footprint from the at least one neighboring cell of the first cell, and the non-edge beam footprint is adjacent to the source cell.

In summary, in a possible implementation, among the beam footprints in the first cell, the non-edge beam footprint is separated by the at least one beam footprint from the at least one neighboring cell of the first cell, and/or the non-edge beam footprint is adjacent to the source cell.

In a possible implementation, among the beam footprints within the first cell, the edge beam footprint is adjacent to the at least one neighboring cell of the first cell.

In a possible implementation, among the beam footprints within the first cell, the edge beam footprint is adjacent to the at least one neighboring cell of the first cell, in which the at least one neighboring cell does not include the source cell.

It should be noted that in some embodiments of the present disclosure, descriptions such as "between B and C" represent a time period in which a start time is B and an end time is C, and the time period may or may not include B and/or C according to situations, which is not limited in the present disclosure. B and C represent any two different times or time points.

Hereinafter, a method for information transmission applied to a network device according to embodiments of the present disclosure may be described.

In the present disclosure, in a case where a terminal in a first beam footprint does not need to perform neighboring cell measurement, the network device may not send first neighboring cell configuration information for performing the neighboring cell measurement to the terminal, but send first time indication information that indicates time information for the terminal to receive the first neighboring cell configuration information. Since consumption of a sending power and a channel resource of the network device by sending the first time indication information is greatly reduced compared with sending the first neighboring cell configuration information, the sending power and the channel resource of the network device may be saved.

On this basis, a configuration and sending of cell specific system information may be further improved to a configuration and sending of beam footprint specific system information. That is, the network device may broadcast the system information and accurately configure the system information to terminals in various beam footprints with the beam footprint as granularity, such that a plurality of pieces of system information in a corresponding beam footprint are the same and a plurality of pieces of system information in different beam footprints are different. Alternatively, the network device may broadcast the system information and accurately configure the system information to the terminals in various beam footprints with a beam footprint group as granularity, such that a plurality of pieces of system information in a corresponding beam footprint group are the same and a plurality of pieces of system information in different beam footprint groups are different.

FIG. 4 is a flowchart illustrating a method for information transmission according to an embodiment of the present disclosure. It should be noted that the method for information transmission in the present embodiment is performed by an apparatus for information transmission. Here, the apparatus for information transmission may be a network device or may be configured in a network device, which is not limited in the present disclosure. Embodiments of the present disclosure may be described by taking the apparatus for information transmission as the network device as an example.

As shown in FIG. 4, the method for information transmission may include the following steps.

In step 401, first time indication information is sent to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

Accordingly, the terminal in the first beam footprint may receive the first time indication information sent by the network device, and further receive the first neighboring cell configuration information according to the time information indicated by the first time indication information.

The time information may include information of at least one time period or information of one or more time points, which is not limited in the present disclosure.

It may be understood that, in a case where the first cell is a cell moving relative to the ground, relative positions of the same first beam footprint in the first cell may be different at different time points as the first cell moves, such that there may be a case where the terminal in the first cell does not need to perform the neighboring cell measurement and a case where the terminal in the first cell need to perform the neighboring cell measurement.

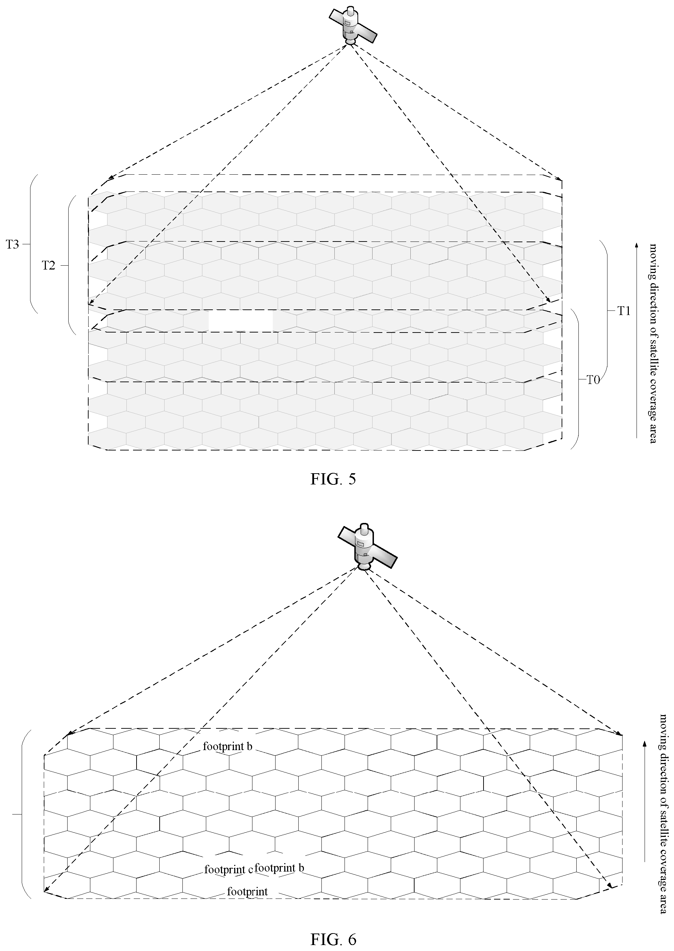

For example, FIG. 5 is taken as an example for explanation. FIG. 5 illustrates the network device as a low-orbit satellite as an example. In FIG. 5, dashed line boxes corresponding to time points T0, T1, T2, and T3 represent a coverage range of a cell 1 covered by a satellite at the time points T0, T1, T2, and T3, respectively, and a direction of an arrow represents a moving direction of a satellite coverage area, that is, the cell 1, relative to the ground. The cell 1 includes a plurality of beam footprints, and each hexagon represents one beam footprint.

Referring to FIG. 5, a beam footprint A is taken as an example. At the time point T0, a beam footprint A has just entered the coverage range of the cell 1. Since a moving speed of the satellite far exceeds a moving speed of the terminal for the low-orbit satellite, the terminal in the beam footprint A does not move out of the coverage range of the cell 1 along the moving direction of the cell 1, and the terminal in the beam footprint A does not have a possibility of changing cells in this case. Therefore, the terminal in the beam footprint A does not need to perform the neighboring cell measurement.

At the time pointT1, the beam footprint A enters a center position of the cell 1 since the cell 1 moves relative to the ground. At this time, the terminal in the beam footprint A still does not need to perform the neighboring cell measurement.

At the time point T2, the beam footprint A is about to leave the coverage range of the cell 1 since the cell 1 moves relative to the ground. At this time, the terminal in the beam footprint A may already measure a neighboring cell and is about to perform reselection or handover of the cell. Therefore, the terminal in the beam footprint A needs to perform the neighboring cell measurement.

At the time point T3, the beam footprint A is out of the coverage range of the cell 1 since the cell 1 moves relative to the ground. The terminal in the beam footprint A should complete the handover or reselection to the neighboring cell before this time point in order to maintain continuity of service.

In embodiments of the present disclosure, the network device may not send the first neighboring cell configuration information to the terminal in the first beam footprint in a case where the terminal in the first beam footprint does not need to perform the neighboring cell measurement, and may send the first neighboring cell configuration information to the terminal in the first beam footprint in a case where the terminal in the first beam footprint needs to perform the neighboring cell measurement. Moreover, in a case where the terminal in the first beam footprint does not need to perform the neighboring cell measurement, the network device may send the first time indication information to the terminal in the first beam footprint to indicate the terminal to receive the time information of the first neighboring cell configuration information, thereby enabling the terminal to receive the first neighboring cell configuration information in time in a case where the network device sends the first neighboring cell configuration information according to the time information, and then to perform the neighboring cell measurement according to the first neighboring cell configuration information.

For example, continuing to take FIG. 5 as an example, in a case where the first beam footprint is the beam footprint A, between the time point T0 and the time point T2, and the terminal in the beam footprint A does not need to perform the neighboring cell measurement, the satellite may send the first time indication information instead of sending the first neighboring cell configuration information to the terminal in the beam footprint A, and between the time point T2 and the time point T3, the terminal in the beam footprint A needs to perform the neighboring cell measurement, and the satellite may send the first neighboring cell configuration information to the terminal in the beam footprint A. After receiving the first neighboring cell configuration information, the terminal in the beam footprint A may perform the neighboring cell measurement, and then perform the reselection or handover of the cell. In this example, since the terminal in the beam footprint A needs to perform the neighboring cell measurement at the time point T2, a time period indicated between the time point T0 and the time point T2 may not include the time point T2, and a time period indicated between the time point T2 and the time point T3 may include the time point T2.

Alternatively, in order for the terminal in the beam footprint A to perform the neighboring cell measurement according to the first neighboring cell configuration information in time at the time point T2, the satellite may send the first time indication information, instead of sending the first neighboring cell configuration information, to the terminal in the beam footprint A between the time point T0 and a configurable time, in which the configurable time is before the time point T2, and send the first neighboring cell configuration information to the terminal in the beam footprint A between the configurable time and the time point T3. The configurable time is a time point that may be flexibly configured according to needs. After receiving the first neighboring cell configuration information, the terminal in the beam footprint A may perform the neighboring cell measurement, and then perform the reselection or handover of the cell.

Since the consumption of the sending power and the channel resource of the network device by sending the first time indication information is greatly reduced as compared with sending the first neighboring cell configuration information, the sending power and the channel resource of the network device may be saved.

In a possible implementation, since a terminal in a non-edge beam footprint does not need to perform the neighboring cell measurement and a terminal in an edge beam footprint needs to perform the neighboring cell measurement, the network device may send the first time indication information, instead of sending the first neighboring cell configuration information to the terminal in the first beam footprint in a case where the first beam footprint is the non-edge beam footprint, to indicate the terminal to receive the time information of the first neighboring cell configuration information.

In a case where the first beam footprint is converted from the non-edge beam footprint to the edge beam footprint as a first cell moves, the network device may start sending the first neighboring cell configuration information to the terminal in the first beam footprint and continue sending the first neighboring cell configuration information at a preset time interval until the first beam footprint is out of a coverage range of the first cell, to continuously send the first neighboring cell configuration information to the terminal in the first beam footprint within a time period. A start time of the time period is a time at which the first beam footprint is converted from the non-edge beam footprint to the edge beam footprint, and an end time of the time period is a time at which the first beam footprint is out of the coverage range of the first cell, and the time period may include the start time, and may include or not include the end time.

Alternatively, at a configurable time before the time point at which the first beam footprint is converted from the non-edge beam footprint to the edge beam footprint, the network device may start sending the first neighboring cell configuration information to the terminal in the first beam footprint, and continue sending the first neighboring cell configuration information at the preset time interval until the first beam footprint is out of the coverage range of the first cell, to continuously send the first neighboring cell configuration information to the terminal in the first beam footprint within the time period. The start time of the time period is the configurable time, and the end time is the time at which the first beam footprint is out of the coverage range of the first cell. The time period may include the configurable time, and may or may not include the end time.

Accordingly, in a possible implementation, the first time indication information may include a first indication and a second indication, in which the first indication indicates a service end time of the first cell for the first beam footprint, and the second indication indicates a duration for which the network device sends the first neighboring cell configuration information.

The service end time of the first cell for the first beam footprint, that is, a time at which the first beam footprint is out of the coverage range of the first cell, may be an end time of the network device sending the first neighboring cell configuration information. A duration of the network device sending the first neighboring cell configuration information, that is, a duration of the network device continuously sending the first neighboring cell configuration information to the terminal in the first beam footprint, may be a duration of the first cell moving by at least one beam footprint, and may be determined according to a size of the beam footprint defined in a communication system and a moving speed of the first cell.

The first indication may represent a time point, and may represent an absolute time point in some possible embodiments. The second indication may represent a length of time, and may represent a length of time in some possible embodiments. A difference between the first indication and the second indication is a start time of the network device sending the first neighboring cell configuration information.

The first time indication information includes the first indication and the second indication, such that the terminal in the first beam footprint may determine the start time of the network device sending the first neighboring cell configuration information by combining the first indication and the second indication.

Accordingly, in a possible implementation, the network device may send the first time indication information, instead of sending the first neighboring cell configuration information, to the terminal in the first beam footprint before a first time, and send the first neighboring cell configuration information to the terminal in the first beam footprint between the first time and the service end time of the first cell for the first beam footprint.

In some possible embodiments, the first time is a time point. The first time is before the service end time and is separated from the service end time by the above duration. For example, the first time may be a time point at which the first beam footprint changes from the non-edge beam footprint to the edge beam footprint, or a configurable time before this time point. The configurable time is a time point that may be flexibly configured according to needs.

In some possible embodiments, at the first time or the service end time, the first neighboring cell configuration information may or may not be sent.

In a possible implementation, the first time indication information includes a third indication, and the third indication indicates a start time of the network device sending the first neighboring cell configuration information.

The start time of the network device sending the first neighboring cell configuration information may be determined according to a time point at which the first beam footprint changes from the non-edge beam footprint to the edge beam footprint. For example, the start time may be a time point at which the first beam footprint changes from the non-edge beam footprint to the edge beam footprint, or a configurable time before the start time.

The third indication may represent a time point, and may represent an absolute time point in some possible embodiments.

The first time indication information includes the third indication, such that the terminal in the first beam footprint may directly determine the start time of the network device sending the first neighboring cell configuration information according to the third indication.

Accordingly, in a possible implementation, the network device may send the first time indication information instead of sending the first neighboring cell configuration information to the terminal in the first beam footprint before the start time of the network device sending the first neighboring cell configuration information and send the first neighboring cell configuration information to the terminal in the first beam footprint after the start time.

In some possible embodiments, at the start time indicated by the third indication, the first neighboring cell configuration information may or may not be sent.

It should be noted that, for a non-terrestrial communication system such as a satellite communication system, a possible implementation is that a cell covered by a satellite moves with a beam footprint as granularity. As shown in FIG. 6, a satellite coverage area, that is, a cell 1 in FIG. 6, may be moved with the beam footprint as a step size, and a moving direction may be a direction of an arrow shown in FIG. 6. For example, one row of beam footprints is advanced each time, and a rear row of beam footprints is released for service by the neighboring cell. Time points for different beam footprints to leave a coverage range of cell 1 may be different, for example, taking a beam footprint a and a beam footprint b in FIG. 6 as an example, at the corresponding time point in FIG. 6, the beam footprint a is about to leave the coverage range of the cell 1, while the beam footprint b has just entered the coverage range of the cell 1, thus service end times of the cell 1 for these two beam footprints are different.

In embodiments of the present disclosure, in a case where the first cell is a cell moving relative to the ground, a service end time of the first cell for a first beam footprint and a service end time of the first cell for a second beam footprint may satisfy the following laws.

In a case where projection positions of the first beam footprint and the second beam footprint in the moving direction of the first cell are different, the service end time of the first cell for the first beam footprint is different from the service end time of the first cell for the second beam footprint.

In a case where the projection positions of the first beam footprint and the second beam footprint in the moving direction of the first cell are the same, the service end time of the first cell for the first beam footprint is the same as the service end time of the first cell for the second beam footprint.

The later the time point at which the beam footprint is out of the coverage range of the first cell, the later the service end time of the first cell for the beam footprint.

For example, continuing to refer to FIG. 6, taking the beam footprint a and a beam footprint c as an example, in a case where the projection positions of the beam footprint a and the beam footprint c in the moving direction of the cell 1 are different, the service end time of the cell 1 for the beam footprint a is different from the service end time of the cell 1 for the beam footprint c, and the service end time of the cell 1 for the beam footprint c is later than the service end time of the cell 1 for the beam footprint a. Taking the beam footprint c and a beam footprint d as an example, in a case where the projection positions of the beam footprint c and the beam footprint d in the moving direction of the cell 1 are the same, the service end time of the cell 1 for the beam footprint c is the same as the service end time of the cell 1 for the beam footprint d.

Since the service end time of the first cell for different beam footprints may be different, first indications corresponding to different beam footprints may be different. In embodiments of the present disclosure, the first indications corresponding to different beam footprints may be configured differently, and the first indications are accurate and effective for each beam footprint, such that terminals in different beam footprints may perform time based measurement initiation according to the first indications corresponding to the beam footprints, thereby improve timeliness and accuracy of measurement.

In a possible implementation, the first indication may be a t-Service information element or parameter, or other information elements or parameters, which is not limited in the present disclosure. The t-Service may be referred to as a service end time indication.

In a possible implementation, a second indication may be a t-neighborOSI information element or parameter, or other information elements or parameters, which is not limited in the present disclosure.

In a possible implementation, a third indication may be a t-neighborOSI information element or parameter, or other information elements or parameters, which is not limited in the present disclosure.

Data types, value ranges and units of the first indication, the second indication and the third indication may be configured as required, respectively, which is not limited in the present disclosure.

As an example, the data type of the first indication, the second indication or the third indication may be, for example, an integer, the value range of the first indication, the second indication or the third indication may be, for example, between 0 to 20000, and the unit of the first indication, the second indication or the third indication may be, for example, milliseconds.

It should be noted that in a possible implementation, the third indication and the first indication may be present simultaneously, that is, the network device may send the third indication and the first indication to the terminal in the first beam footprint, such that the terminal may receive the first neighboring cell configuration information in time in a case where the network device sends the first neighboring cell configuration information according to the third indication, and perform the time based measurement initiation according to the first indication.

Continuing with reference to FIG. 5, the first time indication information includes the first indication and the second indication, in which the first indication is the t-Service and the second indication is the t-neighborOSI, as an example, a process for sending the first neighboring cell configuration information and the first time indication information by the network device may be illustrated as an example. The first time obtained by subtracting the t-neighborOSI from the t-Service, which is the time when the first beam footprint changes from the non-edge beam footprint to the edge beam footprint, and the network device sending the first neighboring cell configuration information to the terminal in the first beam footprint between the first time and the service end time of the first cell for the first beam footprint are taken as an example for illustration.

Referring to FIG. 5, at the time point T0, the beam footprint A has just entered the coverage range of the cell 1 covered by the satellite, and at the time point T2, the beam footprint A is about to leave the coverage range of the cell 1, that is, the time point T2 is the time point at which the beam footprint A changes from the non-edge beam footprint to the edge beam footprint, that is, the first time obtained by subtracting the t-neighborOSI from the t-Service. At the time point T3, the beam footprint A is out of the coverage range of the cell 1, which is the service end time indicated by the t-Service.

Between the time point T0 and the time point T2, the satellite may not send the first neighboring cell configuration information to the terminal in the beam footprint A, but send the t-Service and the t-neighborOSI. Accordingly, the terminal in the beam footprint A receives the t-Service and the t-neighborOSI from the satellite.

Between the time point T2 and the time point T3, the satellite may not send the t-neighborOSI to the terminal in the beam footprint A, but send the first neighboring cell configuration information. Accordingly, the terminal in the beam footprint A receives the first neighboring cell configuration information from the satellite.

Since the terminal in the beam footprint A needs to perform the neighboring cell measurement at the time point T2, a time period between the time point T0 and the time point T2 may not include the time point T2, and a time period between the time point T2 and the time point T3 may include the time point T2.

It should be noted that between the time point T2 and the time point T3, the t-Service may be configured to send or not to send as required, which is not limited in the present disclosure.

In a possible implementation, the first time indication information is carried on a first system information block (SIB).

The first SIB may be any SIB.

As an example, the first SIB may be an SIB19.

In a possible implementation, the first neighboring cell configuration information is carried on a second SIB.

The second SIB may be any SIB, and one or more second SIBs may be present, which is not limited in the present disclosure.

As an example, the second SIB may include at least one of an SIB2, an SIB3, an SIB4, an SIB5 or the SIB19.

In a possible implementation, a neighboring cell having an adjacent relationship to the first beam footprint among the neighboring cells the first cell may be referred to as a first neighboring cell. The neighboring cell adjacent to the first beam footprint may include a neighboring cell adjacent to the first beam footprint at a certain time point, or neighboring cells adjacent to the first beam footprint at various time points during a movement of the first cell. One or more neighboring cell adjacent to the first beam footprint at the same time point may be present, which is not limited in the present disclosure.

It should be noted that the first neighboring cell may only include a neighboring cell adjacent to the first beam footprint in other neighboring cells, or may also include a neighboring cell adjacent to the first beam footprint among all neighboring cells of the first cell, which is not limited in the present disclosure. Other neighboring cells refer to neighboring cells among the neighboring cells of the first cell except the source cell.

The first neighboring cell only including the neighboring cell adjacent to the first beam footprint among other neighboring cells is taken as an example. Continuing with reference to FIG. 3, taking the first beam footprint as a beam footprint 2 as an example, since the beam footprint 2 is adjacent to the neighboring cell 4 at a corresponding time point in FIG. 3, with the movement of the first cell, the beam footprint 2 is adjacent to the neighboring cell 3 at a later time point, and the neighboring cell 4 is the source cell, the first neighboring cell may include the neighboring cell 3.

In a possible implementation, at least one neighboring cell of the first cell may be referred to as the first neighboring cell. The at least one neighboring cell may include all neighboring cells of the first cell, or other neighboring cells among the neighboring cells of the first cell except the source cell, which is not limited in the present disclosure.

For example, all of the neighboring cells of the first cell being referred to as the first neighboring cell is taken as an example. With continued reference to FIG. 3, the first beam footprint being the beam footprint 2 is taken as an example, the first neighboring cells may include the neighboring cell 1, the neighboring cell 2, the neighboring cell 3 and the neighboring cell 4.

The first neighboring cell configuration information may include configuration information related to the first neighboring cell. The configuration information related to the first neighboring cell may include a measurement parameter of the first neighboring cell, a reselection condition of the first neighboring cell, a cell identifier of the first neighboring cell, a frequency resource used by the first neighboring cell, information of a network device where the neighboring cell is located, such as ephemeris of the satellite, and the like.

The first neighboring cell configuration information includes the configuration information related to the first neighboring cells. The first neighboring cells are the neighboring cells adjacent to the first beam footprint at the plurality of time points respectively among the neighboring cells of the first cell, such that the terminal may receive the first neighboring cell configuration information once in the first beam footprint during the movement of the first cell, thus avoiding frequent reception of the first neighboring cell configuration information.

In a possible implementation, in a case where the first neighboring cell configuration information is carried on the second SIB, and the second SIB includes at least one of the SIB2, the SIB3, the SIB4, the SIB5 or the SIB19, information included in the SIB2, the SIB3, the SIB4, the SIB5 and the SIB19 is as follows.

The SIB2 may include cell reselection related information related to the first neighboring cell.

The SIB3 may include intra-frequency cell reselection information related to the first neighboring cell.

The SIB4 may include inter-frequency cell reselection information related to the first neighboring cell.

The SIB5 may include inter-system cell reselection information related to the first neighboring cell.

The SIB 19 may include related information of at least one of a non-terrestrial network (NTN) serving cell or a satellite cell in the first neighboring cell.

The cell reselection related information may include public information of intra-frequency, inter-frequency and inter-system, current serving cell information used for the cell reselection, and some information used for cell reselection of the intra-frequency.

The intra-frequency cell reselection information may include a list of intra-frequency neighboring cells, and the like.

The inter-frequency cell reselection information may include a relevant cell reselection parameter of an inter-frequency carrier, a list of inter-frequency neighboring cells, and the like.

The inter-system cell reselection information may include a cell reselection related parameter and related carrier information of the E-UTRAN.

From the above analysis, it may be seen that with the method for information transmission provided in embodiments of the present disclosure, in terms of a time dimension, it is not necessary to constantly broadcast the first neighboring cell configuration information for the same first beam footprint in the first cell. In a case where the terminal in the first beam footprint does not need to perform the neighboring cell measurement, the network device may send to the terminal the first time indication information instead of the first neighboring cell configuration information for performing the neighboring cell measurement, and the first time indication information indicates the time information for the terminal to receive the first neighboring cell configuration information. Since the consumption of the sending power and the channel resource of the network device by sending the first time indication information is greatly reduced as compared with sending the first neighboring cell configuration information, the sending power and the channel resource of the network device may be saved.

For different beam footprints in a spatial dimension in the first cell, at the same time point, the network device may determine whether the terminals in various beam footprints in the first cell need to perform the neighboring cell measurement currently, and send, according to a determination result of whether the terminals in various beam footprints need to perform the neighboring cell measurement, corresponding first neighboring cell configuration information to a part of the beam footprints, and corresponding first time indication information, instead of the corresponding first neighboring cell configuration information, to another part of the beam footprints. The first time indication information indicates time information for the terminal in the corresponding beam footprint to receive the first neighboring cell configuration information. Since few channel resources are needed to send the first time indication information, the method for information transmission of embodiments of the present disclosure may reduce an amount of data sent to various beam footprints in the first cell at the same time point, compared with sending the first neighboring cell configuration information to various beam footprints in the first cell at the same time point, thus saving the sending power and the channel resource of the network device.

It should be noted that in the embodiments of the present disclosure, some or all of the steps and optional implementations thereof may be arbitrarily combined with some or all of the steps in other embodiments, or may be arbitrarily combined with optional implementations of other embodiments.

In the embodiments of the present disclosure, each step and optional implementations thereof may also be implemented independently.

Next, the method for information transmission provided by the embodiments of the present disclosure may be further illustrated.

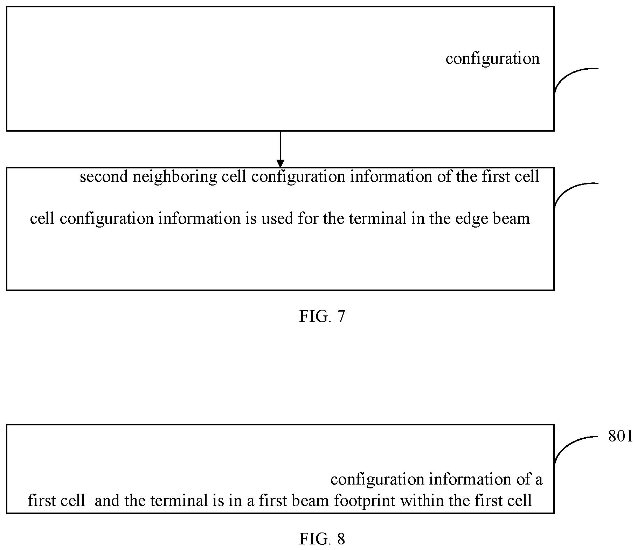

FIG. 7 is a flowchart illustrating a method for information transmission according to an embodiment of the present disclosure. It should be noted that the method for information transmission in the present embodiment is performed by an apparatus for information transmission. The apparatus for information transmission may be a network device or configured in the network device, which is not limited in the present disclosure. The embodiment of the present disclosure takes the apparatus for information transmission as the network device as an example.

As shown in FIG. 7, the method for information transmission may include the following steps.

In step 701, first time indication information is sent to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

Accordingly, the terminal in the first beam footprint may receive the first time indication information sent by the network device, and further receive the first neighboring cell configuration information according to the time information indicated by the first time indication information.

For the explanation of step 701, reference may be made to other embodiments, details are not be repeated here.

In a possible implementation, in a case where the network device sends the first time indication information to the terminal in the first beam footprint, the first beam footprint may be a non-edge beam footprint, and at this time, does not send the first neighboring cell configuration information to the terminal in the first beam footprint.

In step 702, second neighboring cell configuration information of the first cell is sent to the terminal in an edge beam footprint, in which the second neighboring cell configuration information is used for the terminal in the edge beam footprint to perform the neighboring cell measurement, and the edge beam footprint is within the first cell and adjacent to at least one neighboring cell of the first cell.

Accordingly, in a case where the terminal is at the edge beam footprint, the terminal may receive the second neighboring cell configuration information sent by the network device, and then perform the neighboring cell measurement according to the second neighboring cell configuration information.

The edge beam footprint in step 702 may be any edge beam footprint different from the first beam footprint in the first cell, and one or more edge beam footprints may be present, which is not limited in the present disclosure.

In a possible implementation, the at least one neighboring cell in step 702 may include at least one neighboring cell among all of the neighboring cells of the first cell.

In a possible implementation, the at least one neighboring cell in step 702 may include at least one neighboring cell among other neighboring cells. Other neighboring cells are the neighboring cells among the neighboring cells of the first cell except a source cell.

In a possible implementation, step 701 and step 702 may be executed simultaneously, or step 701 may be executed before step 702, or step 702 may be executed before step 701, which is not limited in the present disclosure.

In a possible implementation, the second neighboring cell configuration information is carried on a third SIB.

In a possible implementation, the third SIB may be any SIB, and one or more third SIBs may be present, which is not limited in the present disclosure.

As an example, the third SIB may include at least one of an SIB2, an SIB3, an SIB4, an SIB5 or an SIB19.

In a possible implementation, the second neighboring cell configuration information may include configuration information related to a second neighboring cell. The configuration information related to the second neighboring cell may include a measurement parameter of the second neighboring cell, a reselection condition of the second neighboring cell, a cell identifier of the second neighboring cell, a frequency resource used by the second neighboring cell, information of the network device where the neighboring cell is located, such as an ephemeris of the satellite, and the like. Similar to the first neighboring cell, the second neighboring cell may be a neighboring cell having an adjacent relationship with the edge beam footprint among the neighboring cells of the first cell, or at least one neighboring cell of the first cell. The at least one neighboring cell may include all of the neighboring cells of the first cell, or other neighboring cells among the neighboring cells of the first cell except the source cell, which is not limited in the present disclosure.

The second neighboring cell configuration information includes the configuration information related to the second neighboring cell, in which the second neighboring cell includes neighboring cells adjacent to the edge beam footprint at a plurality of time points among the neighboring cells of the first cell, such that the terminal may receive the second neighboring cell configuration information once in the edge beam footprint during the movement of the first cell, thus avoiding frequent reception of the second neighboring cell configuration information.

In a possible implementation, in a case where the second neighboring cell configuration information is carried on the third SIB, and the third SIB includes at least one of the SIB2, the SIB3, the SIB4, the SIB5 or the SIB19, information included in the SIB2, the SIB3, the SIB4, the SIB5 and the SIB19 is as follows.

The SIB2 may include cell reselection related information related to the second neighboring cell.

The SIB3 may include intra-frequency cell reselection information related to the second neighboring cell.

The SIB4 may include inter-frequency cell reselection information related to the second neighboring cell.

The SIB5 may include inter-system cell reselection information related to the second neighboring cell.

The SIB 19 may include related information of at least one of an NTN serving cell or a satellite cell in the second neighboring cell.

It should be noted that contents of the second neighboring cell configuration information sent by the network device to different edge beam footprints may be the same or different, which is not limited in the present disclosure.

In a possible implementation, the network device may send second time indication information to the terminal in the edge beam footprint, in which the second time indication information indicates a service end time of the first cell for the edge beam footprint. Accordingly, in a case where the terminal is in the edge beam footprint, the terminal may receive the second time indication information sent by the network device, and then perform time based measurement initiation according to the second time indication information.

Next, referring to FIG. 3, the method for information transmission of the embodiments of the present disclosure may be illustrated. The first neighboring cell only including a neighboring cell having an adjacent relationship with the first beam footprint among other neighboring cells, and the second neighboring cell only including a neighboring cell having an adjacent relationship with the edge beam footprint among other neighboring cells are taken as an example. Other neighboring cells refer to neighboring cells among the neighboring cells of the first cell except the source cell.

Referring to FIG. 3, at a current time point corresponding to a beam footprint distribution shown in FIG. 3, a gray-filled beam footprint in the first cell may be the non-edge beam footprint, and beam footprints 1, 7 and 14-38 may be the edge beam footprints.

The first beam footprint may be any non-edge beam footprint in FIG. 3. Since the terminals in these beam footprints do not need to perform the neighboring cell measurement at the current time point, the satellite may send, to the terminals within these beam footprints, the first time indication information to indicate the time information for the terminal to receive the first neighboring cell configuration information, instead of the first neighboring cell configuration information. The first time indication information may include the first indication and the second indication. Alternatively, the first time indication information may include the third indication. Since the non-edge beam footprint may be adjacent to the neighboring cell 3 at a later time point with the movement of the first cell, the first neighboring cell configuration information may include configuration information related to the neighboring cell 3.

Taking the beam footprint 1 in the edge beam footprint as an example, since a terminal in the beam footprint 1 needs to perform the neighboring cell measurement at the current time point, the satellite may send the corresponding second neighboring cell configuration information to the terminal in the beam footprint 1 for the terminal in the beam footprint 1 to perform the neighboring cell measurement. Since the beam footprint 1 is adjacent to the neighboring cell 1 at the current time point, and the beam footprint 1 may be adjacent to the neighboring cell 3 at a later time point with the movement of the first cell relative to the ground, the second neighboring cell configuration information sent to the terminal in the beam footprint 1 may include configuration information related to the neighboring cell 1 and the neighboring cell 3.

Similarly, taking the beam footprint 7 in the edge beam footprint as an example, since a terminal in the beam footprint 7 needs to perform the neighboring cell measurement at the current time point, the satellite may send the corresponding second neighboring cell configuration information to the terminal in the beam footprint 7 for the terminal in the beam footprint 7 to perform the neighboring cell measurement. Since the beam footprint 7 is adjacent to the neighboring cell 2 at the current time point, and the beam footprint 7 may be adjacent to the neighboring cell 3 at a later time point with the movement of the first cell relative to the ground, the second neighboring cell configuration information sent to the terminal in the beam footprint 7 may include configuration information related to the neighboring cell 2 and the neighboring cell 3.

Taking the beam footprint 20 in the edge beam footprint as an example, since a terminal in the beam footprint 20 needs to perform the neighboring cell measurement at the current time point, the satellite may send the corresponding second neighboring cell configuration information to the terminal in the beam footprint 20 for the terminal in the beam footprint 20 to perform the neighboring cell measurement. The second neighboring cell configuration information sent to the terminal in the beam footprint 20 may include the configuration information related to the neighboring cell 1 and the neighboring cell 3.

Similarly, taking the beam footprint 26 in the edge beam footprint as an example, since a terminal in the beam footprint 26 needs to perform the neighboring cell measurement at the current time point, the satellite may send the corresponding second neighboring cell configuration information to the terminal in the beam footprint 26 for the terminal in the beam footprint 26 to perform the neighboring cell measurement. The second neighboring cell configuration information sent to the terminal in the beam footprint 26 may include the configuration information related to the neighboring cell 2 and the neighboring cell 3.

Taking the beam footprint 21 in the edge beam footprint as an example, since a terminal in the beam footprint 21 needs to perform the neighboring cell measurement at the current time point, the satellite may send the corresponding second neighboring cell configuration information to the terminal in the beam footprint 21 for the terminal in the beam footprint 21 to perform the neighboring cell measurement. The second neighboring cell configuration information sent to the terminal in the beam footprint 21 may include configuration information related to the neighboring cell 3.

According to the analysis of FIG. 3, at the same time point, the network device only needs to send the corresponding second neighboring cell configuration information to a small part of terminals in the edge beam footprints in the first cell, and send the corresponding first time indication information to a large part of terminals in the non-edge beam footprints in the first cell, thereby saving the sending power and the channel resource of the network device.

It is worth noting that the method for information transmission in the above embodiments of the present disclosure is explained by taking a communication system supporting a single-frequency point coverage as an example, in which the single-frequency point coverage means that any beam footprint is covered by a single cell using a certain carrier frequency. In a possible implementation, the method for information transmission of the present disclosure may also be applied to a communication system supporting a multi-frequency point overlapping coverage. The multi-frequency point overlapping coverage means that the same beam footprint may be covered by a plurality of cells, in which different cells adopt different carrier frequencies.

It may be understood that in the communication system supporting the multi-frequency point overlapping coverage, different priorities may be arranged for different carrier frequencies, in which the priority corresponding to the carrier frequency may be referred to as a frequency priority, the frequency priorities of different cells are different, and the terminal may usually reside in a cell with a highest frequency priority.

Therefore, in the communication system supporting the multi-frequency point overlapping coverage, the method for information transmission of the above embodiments may continue to be adopted for any first beam footprint in a case where the frequency priority of the first cell covered by the network device is the highest.

In a case where the frequency priority of the first cell covered by the network device is not the highest, in order to make the terminal at any first beam footprint hand over or reselect to other cells with a frequency priority higher than a frequency priority of the first cell, in the above embodiments, regardless of whether the first beam footprint is the edge beam footprint or the non-edge beam footprint, the network device may send configuration information of a second cell covering the first beam footprint to the terminal in the first beam footprint. The frequency priority of the second cell is higher than the frequency priority of the first cell, and the configuration information of the second cell is used for the terminal in the first beam footprint to perform the neighboring cell measurement.

Next, a method for information transmission applied to a terminal according to embodiments of the present disclosure may be described.

FIG. 8 is a flowchart illustrating a method for information transmission according to an embodiment of the present disclosure. It should be noted that the method for information transmission according to the present embodiment is performed by an apparatus for information transmission. The apparatus for information transmission may be a terminal or configured in the terminal, which is not limited in the present disclosure. The embodiment of the present disclosure takes the apparatus for information transmission as the terminal as an example.

As shown in FIG. 8, the method for information transmission may include the following step.

In step 801, first time indication information sent by a network device is received, in which the first time indication information indicates time information for the terminal to receive first neighboring cell configuration information of a first cell, and the terminal is in a first beam footprint within the first cell.

After receiving the first time indication information, the terminal may receive the first neighboring cell configuration information according to the time information indicated by the first time indication information. The first neighboring cell configuration information is used for the terminal to perform the neighboring cell measurement.

It should be noted that for related description of step 801, reference may be made to other embodiments, details may not be repeated here.

According to the method for information transmission provided by the embodiments of the disclosure, the terminal may receive the first time indication information sent by the network device, in which the first time indication information indicates the time information for the terminal to receive the first neighboring cell configuration information of the first cell, and the terminal is in the first beam footprint within the first cell. In a case where the terminal in the first beam footprint does not need to perform the neighboring cell measurement, the network device may send the first time indication information, instead of the first neighboring cell configuration information for performing the neighboring cell measurement, to the terminal. Since consumption for sending power and a channel resource of the network device by sending the first time indication information is greatly reduced compared with sending the first neighboring cell configuration information, the transmission power and the channel resources of the network device may be saved.

In a possible implementation, the first time indication information includes a first indication and a second indication; and the first indication indicates a service end time of the first cell for the first beam footprint, and the second indication indicates a duration for which the network device sends the first neighboring cell configuration information.

In a possible implementation, the terminal may receive the first neighboring cell configuration information sent by the network device between a first time and the service end time, in which the first time is before the service end time and is separated from the service end time by the duration.

It may be understood that the terminal may determine the first time according to the first indication and the second indication received, and receive the first neighboring cell configuration information from the network device in response to monitoring an arrival of the first time.

In a possible implementation, the first time indication information includes a third indication, and the third indication indicates a start time at which the network device sends the first neighboring cell configuration information.

In a possible implementation, the terminal may receive the first neighboring cell configuration information sent by the network device after the start time.

It may be understood that the terminal may receive the first neighboring cell configuration information from the network device in response to monitoring an arrival of the start time indicated by the third indication.

In a possible implementation, the terminal is in an edge beam footprint at a time point when the terminal receives the first neighboring cell configuration information, and the edge beam footprint is within the first cell and adjacent to at least one neighboring cell of the first cell.

In a possible implementation, the first time indication information is carried on a first SIB.

In a possible implementation, the first SIB includes an SIB19.

In a possible implementation, at a time point at which the terminal receives the first time indication information, the first beam footprint is a non-edge beam footprint, the non-edge beam footprint is spaced by at least one beam footprint from at least one neighboring cell of the first cell, and/or the non-edge beam footprint is adjacent to a source cell.

In a possible implementation, the first neighboring cell configuration information is carried on a second SIB.

In a possible implementation, the second SIB includes at least one of an SIB2, an SIB3, an SIB4, an SIB5 or the SIB19.

In a possible implementation, the SIB2 includes cell reselection related information related to a first neighboring cell, and the first neighboring cell is a neighboring cell among the neighboring cells of the first cell that has an adjacent relationship with the first beam footprint, or at least one neighboring cell of the first cell;
the SIB3 includes intra-frequency cell reselection information related to the first neighboring cell;
the SIB4 includes inter-frequency cell reselection information related to the first neighboring cell;
the SIB5 includes inter-system cell reselection information related to the first neighboring cell; and
the SIB 19 includes information related to at least one of a non-terrestrial network (NTN) serving cell or a satellite cell in the first neighboring cell.

In a possible implementation, the terminal may receive second neighboring cell configuration information of the first cell sent by the network device in a case where the terminal is in the edge beam footprint, in which the second neighboring cell configuration information is used for the terminal to perform the neighboring cell measurement, and the edge beam footprint is within the first cell and adjacent to at least one neighboring cell of the first cell.

In a possible implementation, the terminal may receive second time indication information sent by the network device in a case where the terminal is in the edge beam footprint, in which the second time indication information indicates a service end time of the first cell for a second beam footprint.

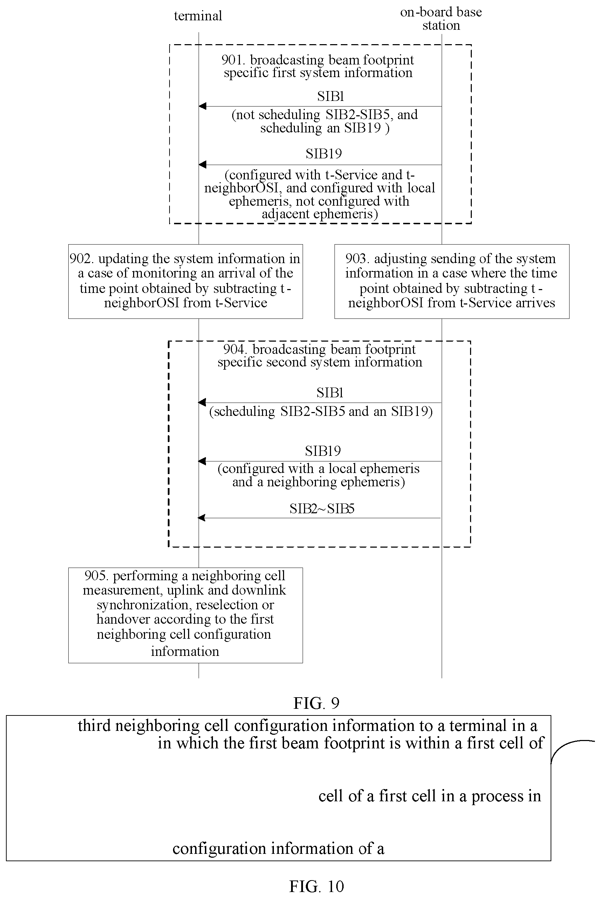

In order to clearly understand the method for information transmission in the present disclosure, a process of information interaction between a network device and a terminal may be illustratively described with reference to FIG. 9. Here, the network device is an on-board base station, a beam footprint 1 at which the terminal is located is a non-edge beam footprint when the beam footprint 1 enters a coverage range of a cell 1 covered by the on-board base station, the beam footprint 1 is changed from the non-edge beam footprint to the edge beam footprint after a certain period of time. When the beam footprint 1 is changed from the non-edge beam footprint to the edge beam footprint, the on-board base station starts to send first neighboring cell configuration information to the terminal in the beam footprint 1 through an SIB2, an SIB3, an SIB4, an SIB5, or an SIB19 related to the neighboring cell in the system information.

The first neighboring cell is a neighboring cell among the neighboring cells of the cell 1 that has an adjacent relationship with the beam footprint 1, the SIB2 includes cell reselection related information related to a first neighboring cell, the SIB3 includes intra-frequency cell reselection information related to the first neighboring cell, the SIB4 includes inter-frequency cell reselection information related to the first neighboring cell, the SIB5 includes inter-system cell reselection information related to the first neighboring cell, and the SIB 19 includes related information of at least one of a non-terrestrial network (NTN) serving cell or a satellite cell in the first neighboring cell.

As shown in FIG. 9, the method may include the follow steps.

In step 901, in a case where the beam footprint 1 is the non-edge beam footprint, the on-board base station broadcasts beam footprint specific first system information to the terminal in the beam footprint 1.

An SIB1 in the first system information does not schedule the SIB 2, the SIB 3, the SIB 4, and the SIB 5 (indicated as SIB 2 to SIB 5 in FIG. 9), but schedules the SIB 19. The SIB 19 is configured with a t-Service, a t-neighborOSI, and a local ephemeris, but is not configured with a neighboring ephemeris.

The t-Service indicates a service end time of the cell 1 for the beam footprint 1. The t-neighborOSI indicates a duration for sending the first neighboring cell configuration information by the on-board base station before the beam footprint 1 leaves a coverage range of the cell 1.

Accordingly, a terminal in the beam footprint 1 may receive the SIB1 and the SIB19 in the first system information.

It should be noted that, in this embodiment, when describing an SIB scheduled by the SIB1 and an SIB not scheduled by the SIB1, it is described only for an SIB related to the neighboring cell in the system information broadcast by the on-board base station, and other SIBs in the system information are not described again.

It should be noted that a time at which the beam footprint 1 is changed from the non-edge beam footprint to the edge beam footprint may be a time point obtained by subtracting the t-neighborOSI from the t-Service, and accordingly, step 901 may be executed before the time point obtained by subtracting the t-neighborOSI from the t-Service.

In step 902, the system information is updated in a case where the terminal in the beam footprint 1 monitors an arrival of the time point obtained by subtracting the t-neighborOSI from the t-Service.

It may be understood that at the time point obtained by subtracting the t-neighborOSI from the t-Service, the beam footprint 1 is changed from the non-edge beam footprint to the edge beam footprint, and the on-board base station may start sending the first neighboring cell configuration information to the terminal in the beam footprint 1. After receiving the t-Service and the t-neighborOSI in the SIB 19, the terminal in the beam footprint 1 may monitor whether the time point obtained by subtracting the t-neighborOSI from the t-Service has arrived, and may update the system information in response to monitoring the arrival of the time point obtained by subtracting the t-neighborOSI from the t-Service.

In an embodiment of the present disclosure, the terminal may update the system information immediately after monitoring the arrival of the time point obtained by subtracting the t-neighborOSI from the t-Service, instead of waiting for a next system information modification period defined in the related art to update the system information, thus, obtaining new system information from the on-board base station.

Accordingly, as shown in FIG. 9, the method may further include step 903 including that the on-board base station adjusts sending of the system information in a case where the time point obtained by subtracting the t-neighborOSI from the t-Service arrives.

In step 904, in a case where the beam footprint 1 is the edge beam footprint, the on-board base station broadcasts beam footprint specific second system information to the terminal in the beam footprint 1.

The SIB1 in the second system information schedules the SIB2, the SIB3, the SIB4, the SIB5, and the SIB19. The SIB 19 is configured with local ephemeris and the adjacent ephemeris.

The SIB 19 may be configured with the t-Service, which is used to indicate the service end time of the cell 1 for the beam footprint 1, or may not be configured with the t-Service, which is not limited in the present disclosure.

Accordingly, the terminal in the beam footprint 1 may receive the SIB1, the SIB19, the SIB2, the SIB3, the SIB4, and the SIB5 (indicated as SIB2 to SIB5 in FIG. 9) in the second system information.

In step 905, the terminal performs a neighboring cell measurement, uplink and downlink synchronization, reselection or handover according to the first neighboring cell configuration information.

It may be understood that the terminal in the beam footprint 1 may obtain the first neighboring cell configuration information according to the SIB2, the SIB3, the SIB4, the SIB5, and the SIB19 received, and then perform the neighboring cell measurement, the uplink and downlink synchronization, the reselection, or the handover according to the first neighboring cell configuration information.

It should be noted that for a satellite communication system, a beam footprint coverage of a satellite is usually tens of kilometers, and it is not frequent for the terminal to change the beam footprint. However, there is a special scenario in which the terminal is just at an edge of multi-beam footprints. In this scenario, in a case where the terminal recognizes beam ping-pong, system information of a historical beam on a ping-pong loop may be stored to avoid repeated reception of the same system information. For example, in embodiments of the present disclosure, the terminal may store information such as the t-service, the t-neighborOSI, or the first neighboring cell configuration information, second neighboring cell configuration information broadcast by each beam on the ping-pong loop, and select information that actually needs to be used according to a beam actually resident.

In order to save a sending power and a channel resource of a network device, the present disclosure also provides another method for information transmission.

Hereinafter, a method for information transmission applied to the network device may be described with reference to FIG. 10.

FIG. 10 is a flowchart illustrating a method for information transmission according to an embodiment of the present disclosure. It should be noted that the method for information transmission in the present embodiment is executed by an apparatus for information transmission. The apparatus for information transmission may be a network device or may be configured in the network device, which is not limited in the present disclosure. Embodiments of the present disclosure may be described by taking the apparatus for information transmission as the network device as an example.

As shown in FIG. 10, the method for information transmission may include the following step.

In step 1001, third neighboring cell configuration information is sent to a terminal in a first beam footprint, in which the first beam footprint is within a first cell of the network device, and the third neighboring cell configuration information includes configuration information related to a third neighboring cell adjacent to the first beam footprint in a neighboring cell of a first cell in a process in which the first beam footprint is covered by the first cell, and the third neighboring cell configuration information is used for the terminal to perform neighboring cell measurement.

In a possible implementation, the third neighboring cell may be any neighboring cell adjacent to the first beam footprint among a source cell and other neighboring cells during the process in which the first beam footprint is covered by the first cell. Alternatively, the third neighboring cell may be any neighboring cell adjacent to the first beam footprint among other neighboring cells during the process in which the first beam footprint is covered by the first cell.

The source cell is a cell in which the beam footprint in the first cell is located before being covered by the first cell. The other neighboring cells are neighboring cells other than the source cell among the neighboring cells of the first cell.

One or more third neighboring cells may be present, which is not limited in the present disclosure.

The configuration information related to the third neighboring cell may include a measurement parameter of the third neighboring cell, a reselection condition of the third neighboring cell, a cell identifier of the third neighboring cell, a frequency resource used by the third neighboring cell, information of the network device where the neighboring cell is located, such as an ephemeris of the satellite, and the like.

Continuing with reference to FIG. 3, the third neighboring cell configuration information may be described illustratively by taking the third neighboring cell as any neighboring cell adjacent to the first beam footprint among other neighboring cells in a process in which the first beam footprint is covered by the first cell as an example.

Taking the first beam footprint as the beam footprint 1 in FIG. 3 as an example, since the beam footprint 1 is adjacent to the neighboring cell 1 and the neighboring cell 4 at the current time point corresponding to a beam footprint distribution shown in FIG. 3, and at a later time point, the beam footprint 1 is adjacent to the neighboring cell 1 or adjacent to the neighboring cell 1 and the neighboring cell 3, the third neighboring cell configuration information sent to the terminal in the beam footprint 1 may include configuration information of the neighboring cell 1 and the neighboring cell 3.

Taking the first beam footprint as the beam footprint 2 in FIG. 3 as an example, since the beam footprint 2 is adjacent to the neighboring cell 4 at the current time point and the beam footprint 2 is adjacent to the neighboring cell 3 at a later time point, the third neighboring cell configuration information sent to the terminal in the beam footprint 2 may include the configuration information of the neighboring cell 3.

Taking the first beam footprint as the beam footprint 7 in FIG. 3 as an example, since the beam footprint 7 is adjacent to the neighboring cell 2 and the neighboring cell 4 at the current time point and the beam footprint 7 is adjacent to the neighboring cell 2 or the neighboring cell 2 and the neighboring cell 3 at a later time point, the third neighboring cell configuration information sent to the terminal in the beam footprint 7 may include the configuration information of the neighboring cell 2 and the neighboring cell 3.

In a possible implementation, the third neighboring cell configuration information may be carried on a fourth SIB.

The fourth SIB may be any SIB, and one or more fourth SIBs may be present, which is not limited in the present disclosure.

As an example, the fourth SIB may include at least one of the SIB2, the SIB3, the SIB4, the SIB5 or the SIB19.

In a possible implementation, the SIB2 includes cell reselection related information related to the third neighboring cell;
the SIB3 includes intra-frequency cell reselection information related to the third neighboring cell;
the SIB4 includes inter-frequency cell reselection information related to the third neighboring cell;
the SIB5 includes inter-system cell reselection information related to the third neighboring cell; and
the SIB 19 includes related information of at least one of an NTN serving cell or a satellite cell in the third neighboring cell.

In a possible implementation, the network device may continuously send the third neighboring cell configuration information at a preset time interval to continuously indicate the third neighboring cell configuration information to the terminal in the first beam footprint.

Accordingly, in a process in which the first beam footprint is covered by the first cell of the network device, the network device sends the third neighboring cell configuration information to the terminal in the first beam footprint, in which the third neighboring cell configuration information includes configuration information related to the third neighboring cell adjacent to the first beam footprint among the neighboring cells of the first cell during the process in which the first beam footprint is covered by the first cell, and the third neighboring cell configuration information is used for the terminal to perform the neighboring cell measurement. Since the third neighboring cell configuration information includes configuration information of a part of neighboring cells among all neighboring cells of the first cell, an amount of data sent by the network device may be reduced as compared with the related art in which the configuration information of all of the neighboring cells is sent to the terminals in various beam footprints within the cell covered by the network device, thereby saving the sending power and the channel resource.

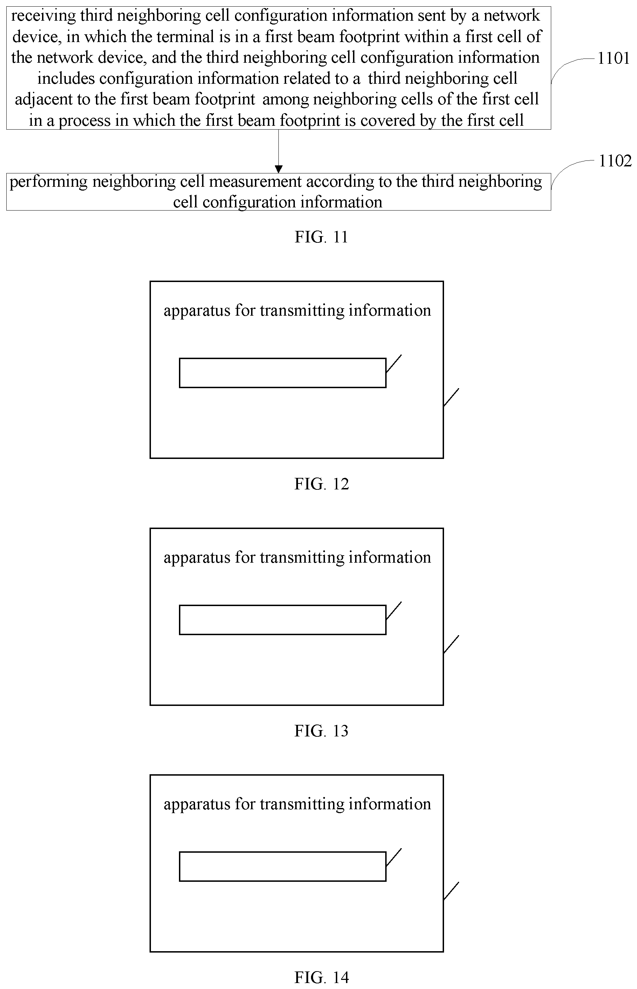

Hereinafter, a method for information transmission applied to a terminal may be described with reference to FIG. 11.

FIG. 11 is a flowchart illustrating a method for information transmission according to an embodiment of the present disclosure. It should be noted that the method for information transmission in the present embodiment is executed by an apparatus for information transmission. The apparatus for information transmission may be a terminal or may be configured in the terminal, which is not limited in the present disclosure. Embodiments of the present disclosure may be described by taking the apparatus for information transmission as the network device as an example.

As shown in FIG. 11, the method for information transmission may include the following steps.

In step 1101, third neighboring cell configuration information sent by a network device is received, in which the terminal is in a first beam footprint within a first cell of the network device, and the third neighboring cell configuration information includes configuration information related to a third neighboring cell adjacent to the first beam footprint among neighboring cells of the first cell in a process in which the first beam footprint is covered by the first cell.

In step 1102, neighboring cell measurement is performed according to the third neighboring cell configuration information.

It should be noted that, for the related description of steps 1101-1102, reference may be made to the related description in other embodiments, details may not be repeated here.

With the method for information transmission provided by the embodiments of the present disclosure, the terminal may receive the third neighboring cell configuration information sent by the network device, and then perform the neighboring cell measurement according to the third neighboring cell configuration information, in which the terminal is in the first beam footprint within the first cell of the network device, and the third neighboring cell configuration information includes configuration information related to the third neighboring cell adjacent to the first beam footprint among the neighboring cells of the first cell during the process in which the first beam footprint is covered by the first cell. Since the third neighboring cell configuration information includes configuration information of a part of neighboring cells among all neighboring cells of the first cell, an amount of data sent by the network device may be reduced as compared with the related art in which the network device sends the configuration information of all of the neighboring cells to the terminals in various beam footprints within the cell covered, thus saving a sending power and a channel resource.

The method for information transmission according to the embodiments of the present disclosure has been described in detail above with reference to the drawings, and an apparatus for information transmission according to the embodiments of the present disclosure may be described below with reference to FIG. 12.

FIG. 12 is a schematic diagram illustrating a structure of an apparatus for information transmission according to an embodiment of the present disclosure. It should be noted that the apparatus for information transmission is applied to a network device.

As shown in FIG. 12, an apparatus 1200 for information transmission includes a transceiver module 1201.

The transceiver module 1201 is configured to send first time indication information to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

In a possible implementation, the first time indication information includes a first indication and a second indication; and the first indication indicates a service end time of the first cell for the first beam footprint, and the second indication indicates a duration for which the network device sends the first neighboring cell configuration information.

In a possible implementation, the transceiver module 1201 is further configured to send the first neighboring cell configuration information to the terminal between a first time and the service end time, in which the first time is before the service end time and is separated from the service end time by the duration.

In a possible implementation, the first time indication information includes a third indication, and the third indication indicates a start time at which the network device sends the first neighboring cell configuration information.

In a possible implementation, the transceiver module 1201 is further configured to send the first neighboring cell configuration information to the terminal after the start time.

In a possible implementation, the first time indication information is carried on a first SIB.

In a possible implementation, the first SIB includes an SIB19.

In a possible implementation, the first beam footprint is a non-edge beam footprint, the non-edge beam footprint is separated by at least one beam footprint from at least one neighboring cell of the first cell, and/or the non-edge beam footprint is adjacent to a source cell.

In a possible implementation, the first neighboring cell configuration information is carried on a second SIB.

In a possible implementation, the second SIB includes at least one of an SIB2, an SIB3, an SIB4, an SIB5 or the SIB19.

In a possible implementation, the SIB2 includes cell reselection related information related to a first neighboring cell, and the first neighboring cell is a neighboring cell among the neighboring cells of the first cell that has an adjacent relationship with the first beam footprint, or at least one neighboring cell of the first cell;
the SIB3 includes intra-frequency cell reselection information related to the first neighboring cell;
the SIB4 includes inter-frequency cell reselection information related to the first neighboring cell;
the SIB5 includes inter-system cell reselection information related to the first neighboring cell; and
the SIB 19 includes related information of at least one of an NTN serving cell or a satellite cell in the first neighboring cell.

In a possible implementation, the transceiver module 1201 is further configured to send second neighboring cell configuration information of the first cell to the terminal in an edge beam footprint, in which the second neighboring cell configuration information is used for the terminal in the edge beam footprint to perform the neighboring cell measurement, and the edge beam footprint is within the first cell and adjacent to at least one neighboring cell of the first cell.

In a possible implementation, the transceiver module 1201 is further configured to send no first neighboring cell configuration information to the terminal in the first beam footprint.

In a possible implementation, the transceiver module 1201 is further configured to send second time indication information to the terminal in the edge beam footprint, in which the second time indication information indicates a service end time of the first cell for the edge beam footprint.

It should be noted that the foregoing explanation of the embodiments of the method for information transmission applied to the network device is also applicable to the apparatus for information transmission of the embodiments, which will not be repeated here.

FIG. 13 is a schematic diagram illustrating a structure of an apparatus for information transmission according to an embodiment of the present disclosure. It should be noted that the apparatus for information transmission is applied to a terminal.

As shown in FIG. 13, an apparatus 1300 for information transmission includes a transceiver module 1301.

The transceiver module 1301 is configured to receive first time indication information sent by a network device, in which the first time indication information indicates time information for the terminal to receive first neighboring cell configuration information of a first cell, and the terminal is in a first beam footprint within the first cell.

In a possible implementation, the first time indication information includes a first indication and a second indication; and
the first indication indicates a service end time of the first cell for the first beam footprint, and the second indication indicates a duration for which the network device sends the first neighboring cell configuration information.

In a possible implementation, the transceiver module 1301 is further configured to receive the first neighboring cell configuration information sent by the network device between a first time and the service end time, in which the first time is before the service end time and is separated from the service end time by the duration.

In a possible implementation, the first time indication information includes a third indication, and the third indication indicates a start time at which the network device sends the first neighboring cell configuration information.

In a possible implementation, the transceiver module 1301 is further configured to receive the first neighboring cell configuration information sent by the network device after the start time.

In a possible implementation, the terminal is in an edge beam footprint at a time point when the terminal receives the first neighboring cell configuration information, and the edge beam footprint is within the first cell and adjacent to at least one neighboring cell of the first cell.

In a possible implementation, the first time indication information is carried on a first SIB.

In a possible implementation, the first SIB includes an SIB19.

In a possible implementation, the first beam footprint is a non-edge beam footprint, the non-edge beam footprint is separated by at least one beam footprint from at least one neighboring cell of the first cell, and/or the non-edge beam footprint is adjacent to a source cell.

In a possible implementation, the first neighboring cell configuration information is carried on a second SIB.

In a possible implementation, the second SIB includes at least one of an SIB2, an SIB3, an SIB4, an SIB5 or the SIB19.

In a possible implementation, the SIB2 includes cell reselection related information related to a first neighboring cell, and the first neighboring cell is a neighboring cell among the neighboring cells of the first cell that has an adjacent relationship with the first beam footprint, or at least one neighboring cell of the first cell;
the SIB3 includes intra-frequency cell reselection information related to the first neighboring cell;
the SIB4 includes inter-frequency cell reselection information related to the first neighboring cell;
the SIB5 includes inter-system cell reselection information related to the first neighboring cell; and
the SIB 19 includes information related to at least one of a non-terrestrial network (NTN) serving cell or a satellite cell in the first neighboring cell.

In a possible implementation, the transceiver module 1301 is further configured to receive second neighboring cell configuration information of the first cell sent by the network device in a case where the terminal is in the edge beam footprint, in which the second neighboring cell configuration information is used for the terminal to perform the neighboring cell measurement, and the edge beam footprint is within the first cell and adjacent to at least one neighboring cell of the first cell.

In a possible implementation, the transceiver module 1301 is further configured to receive second time indication information sent by the network device in a case where the terminal is in the edge beam footprint, in which the second time indication information indicates a service end time of the first cell for a second beam footprint.

It should be noted that the foregoing explanation of the embodiments of the method for information transmission applied to the network device is also applicable to the apparatus for information transmission of the embodiments, which will not be repeated here.

FIG. 14 is a schematic diagram illustrating a structure of an apparatus for information transmission according to an embodiment of the present disclosure. It should be noted that the apparatus for information transmission is applied to a network device.

As shown in FIG. 14, an apparatus 1400 for information transmission includes a transceiver module 1401.

The transceiver module 1401 is configured to send first time indication information to a terminal in a first beam footprint, in which the first time indication information indicates time information for the terminal to receive first neighboring cell configuration information of a first cell, the first beam footprint is within the first cell, and the first neighboring cell configuration information is used for the terminal to perform a neighboring cell measurement.

It should be noted that the foregoing explanation of the embodiments of the method for information transmission applied to the network device is also applicable to the apparatus for information transmission of the embodiments, which will not be repeated here.

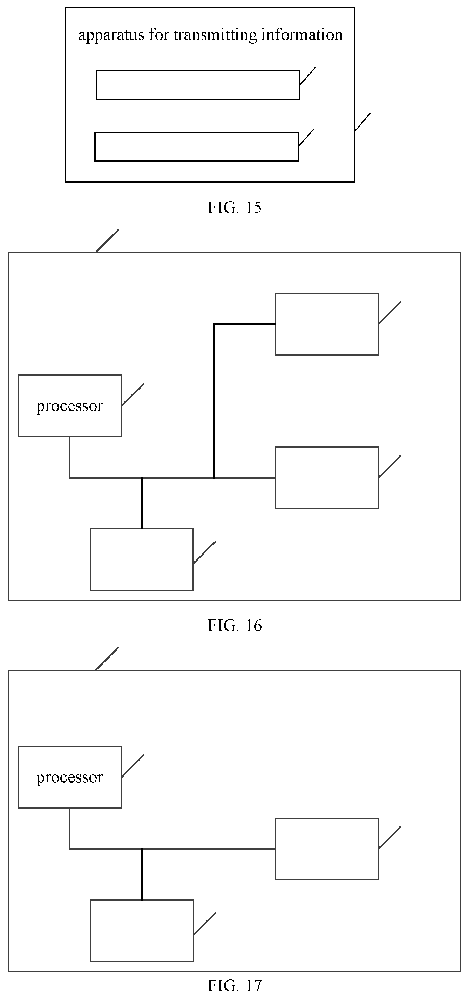

FIG. 15 is a schematic diagram illustrating a structure of an apparatus for information transmission according to an embodiment of the present disclosure. It should be noted that the apparatus for information transmission is applied to a terminal.

As shown in FIG. 15, an apparatus 1500 for information transmission includes a transceiver module 1501 and a processing module 1502.

The transceiver module 1501 is configured to receive third neighboring cell configuration information sent by a network device, in which the terminal is in a first beam footprint within a first cell of the network device, and the third neighboring cell configuration information includes configuration information related to a third neighboring cell among neighboring cells of the first cell adjacent to the first beam footprint during a process in which the first beam footprint is covered by the first cell.

The processing module 1502 is configured to perform neighboring cell measurement according to the third neighboring cell configuration information.

It should be noted that the foregoing explanation of the embodiments of the method for information transmission applied to the network device is also applicable to the apparatus for information transmission of the embodiments, which will not be repeated here.

In order to implement the above embodiments, the present disclosure also provides a communication device, which includes a memory, a processor and a computer program stored in the memory and executable on the processor. In a case where the processor executes the computer program, the method for information transmission disclosed in the embodiments of the present disclosure is implemented.

Referring to FIG. 16, FIG. 16 is a block diagram illustrating a communication device for implementing a method for information transmission according to an illustrative embodiment.

It should be noted that the communication device 1600 shown in FIG. 16 may be a network device or a terminal, or may be a chip, a chip system, or a processor supporting the network device to implement the above-mentioned method, or may be a chip, a chip system or a processor supporting the terminal to implement the above-mentioned method. The communication device 1600 may be used to implement the methods as described in the method embodiments described above, with particular reference to the description of the method embodiments described above.

As shown in FIG. 16, the communication device 1600 may include one or more processors 1601. The processor 1601 may be a general-purpose processor or a special-purpose processor, etc. It may be, for example, a baseband processor or a central processor. The baseband processor may be used to process a communication protocol and communication data, and the central processor may be used to control a communication device (such as a base station, a baseband chip, a terminal device, a terminal device chip, a DU or a CU, etc.), execute a computer program, and process data of the computer program. The processor 1601 is used to call instructions to enable the communication device 1600 perform any of the above methods.

In some embodiments, the communication device 1600 further includes one or more memories 1602 for storing instructions. In some embodiments, all or a portion of the memory 1602 may also be external to the communication device 1600.

In some embodiments, the communication device 1600 further includes one or more transceivers 1603. When the communication device 1600 includes one or more transceivers 1603, communication steps such as transmission and reception in the above method are performed by the transceiver 1603, and other steps are performed by the processor 1601.

In some embodiments, the transceiver 1603 may include a receiver and a transmitter, which may be separate or integrated together. In some embodiments, terms such as a transceiver, a transceiver unit, a transceiver, and a transceiver circuit may be mutually replaced, terms such as a transmitter, a transmitter unit, a transmitter, and a transmitter circuit may be mutually replaced, and terms such as a receiver, a receiving unit, a receiver, and a receiving circuit may be mutually replaced.

In some embodiments, the communication device 1600 further includes one or more interface circuits 1604. The interface circuit 1604 is connected to the memory 1602, and the interface circuit 1604 may be used to receive signals from the memory 1602 or other devices, and may be used to send signals to the memory 1602 or other devices. For example, the interface circuit 1604 may read the instructions stored in the memory 1602 and send the instructions to the processor 1601.

The communication device 1600 described in the above embodiments may be the terminal or the network device, but the scope of the communication device 1600 described in the present disclosure is not limited thereto. The structure of the communication device 1600 may not be limited by FIG. 16. The communication device may be a stand-alone device or may be part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) an ASIC such as a modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) Others.

FIG. 17 is a schematic diagram illustrating a structure of a chip according to an illustrative embodiment. For the case where a communication device 1600 may be a chip or a chip system, reference may be made to the schematic structural diagram of a chip 1700 shown in FIG. 17, which is not limited in the present disclosure.

The chip 1700 includes one or more processors 1701. The processor 1701 is used to call instructions to enable the chip 1700 perform any of the above methods.

In some embodiments, the chip 1700 further includes one or more memories 1702 for storing instructions. In some embodiments, all or part of the memory 1702 may be external to the chip 1700.

In some embodiments, the chip 1700 further includes one or more interface circuits 1703. The interface circuit 1703 is connected to the memory 1702, and may be used to receive signals from the memory 1702 or other devices, and may be used to send signals to the memory 1702 or other devices. For example, the interface circuit 1703 may read instructions stored in the memory 1702 and send the instructions to the processor 1701. In some embodiments, terms such as an interface circuit, an interface, a transceiver pin and a transceiver may be mutually replaced.

The present disclosure also proposes a communication system, which includes the network device and the terminal. The network device is configured to execute the method applied to the network device in the above embodiment, and the terminal is configured to execute the method applied to the terminal in the above embodiment.

The present disclosure also proposes a storage medium on which computer-executed instructions are stored, which, when executed on the communication device 1600, for example, by a processor in the communication device 1600, enable the communication device 1600 to perform any of the above methods. In some embodiments, the storage medium is an electronic storage medium. In some embodiments, the storage medium is a computer-readable storage medium, but it is not limited to this, and it may also be a storage medium readable by other devices. In some embodiments, the storage medium may be a non-transitory storage medium, but it is not limited to this, and it may also be a temporary storage medium.

The present disclosure also proposes a program product, including a computer program, which, when executed by the communication device 1600, for example, by a processor in the communication device 1600, enables the communication device 1600 to perform any of the above methods. In some embodiments, the above program product is a computer program product.

The present disclosure also proposes a computer program that, when run on a computer, enables the computer to perform any of the above methods.

It may be understood that the above apparatus for information transmission, the communication device, the communication system, the storage medium, the program product and the computer program are all used to execute the method according to the embodiments of the present disclosure. Therefore, the beneficial effects it may achieve may refer to the beneficial effects in the corresponding methods, and details may not be repeated here.

It is to be understood that, in the description of the present disclosure, terms of "first" and "second" are only used for description and may not be seen as indicating or implying relative importance. Unless otherwise explained, it is to be understood that a term of "a plurality of" refers to two or more.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs include one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The computer readable storage medium may be read-only memories, magnetic disks, or optical disks.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments may not be construed to limit
the present disclosure, and changes, alternatives, and modifications can be made in the
embodiments without departing from scope of the present disclosure.

## Claims

1. A method for information transmission, applied to a network device, comprising:
sending first time indication information to a terminal in a first beam footprint, wherein the first time indication information indicates time information for the terminal to receive first neighboring cell configuration information of a first cell, the first beam footprint is within the first cell, and the first neighboring cell configuration information is used for the terminal to perform a neighboring cell measurement.

2. The method of claim 1, wherein the first time indication information comprises a first indication and a second indication; and
the first indication indicates a service end time of the first cell for the first beam footprint, and the second indication indicates a duration for which the network device sends the first neighboring cell configuration information.

3. The method of claim 2, further comprising:
sending the first neighboring cell configuration information to the terminal between a first time and the service end time, wherein the first time is before the service end time and is separated from the service end time by the duration.

4. The method of claim 1, wherein the first time indication information comprises a third indication, and the third indication indicates a start time at which the network device sends the first neighboring cell configuration information.

5. The method of claim 4, further comprising:
sending the first neighboring cell configuration information to the terminal after the start time.

6. The method of any one of claims 1 to 5, wherein the first time indication information is carried on a first system information block (SIB).

7. The method of claim 6, wherein the first SIB comprises an SIB19.

8. The method of any one of claims 1 to 7, wherein the first beam footprint is a non-edge beam footprint, the non-edge beam footprint is separated by at least one beam footprint from at least one neighboring cell of the first cell, and/or the non-edge beam footprint is adjacent to a source cell.

9. The method of any one of claims 1 to 8, wherein the first neighboring cell configuration information is carried on a second SIB.

10. The method of claim 9, wherein the second SIB comprises at least one of an SIB2, an SIB3, an SIB4, an SIB5 or the SIB19.

11. The method of claim 10, wherein
the SIB2 comprises cell reselection related information related to a first neighboring cell, and the first neighboring cell is a neighboring cell that has an adjacent relationship with the first beam footprint among the neighboring cells of the first cell, or at least one neighboring cell of the first cell;
the SIB3 comprises intra-frequency cell reselection information related to the first neighboring cell;
the SIB4 comprises inter-frequency cell reselection information related to the first neighboring cell;
the SIB5 comprises inter-system cell reselection information related to the first neighboring cell; and
the SIB 19 comprises related information of at least one of a non-terrestrial network (NTN) serving cell or a satellite cell in the first neighboring cell.

12. The method of any one of claims 1 to 11, further comprising:
sending second neighboring cell configuration information of the first cell to the terminal in an edge beam footprint, wherein the second neighboring cell configuration information is used for the terminal in the edge beam footprint to perform the neighboring cell measurement, and the edge beam footprint is within the first cell and adjacent to at least one neighboring cell of the first cell.

13. The method of claim 12, further comprising:
sending no first neighboring cell configuration information to the terminal in the first beam footprint.

14. The method of claim 12 or 13, further comprising:
sending second time indication information to the terminal in the edge beam footprint, wherein the second time indication information indicates a service end time of the first cell for the edge beam footprint.

15. A method for information transmission, applied to a terminal, comprising:
receiving first time indication information sent by a network device, wherein the first time indication information indicates time information for the terminal to receive first neighboring cell configuration information of a first cell, and the terminal is in a first beam footprint within the first cell.

16. The method of claim 15, wherein the first time indication information comprises a first indication and a second indication; and
the first indication indicates a service end time of the first cell for the first beam footprint, and the second indication indicates a duration for which the network device sends the first neighboring cell configuration information.

17. The method of claim 16, further comprising:
receiving the first neighboring cell configuration information sent by the network device between a first time and the service end time, wherein the first time is before the service end time and is separated from the service end time by the duration.

18. The method of claim 15, wherein the first time indication information comprises a third indication, and the third indication indicates a start time at which the network device sends the first neighboring cell configuration information.

19. The method of claim 18, further comprising:
receiving the first neighboring cell configuration information sent by the network device after the start time.

20. The method of any one of claims 15 to 19, wherein the terminal is in an edge beam footprint at a time point when the terminal receives the first neighboring cell configuration information, and the edge beam footprint is within the first cell and adjacent to at least one neighboring cell of the first cell.

21. The method of any one of claims 15 to 20, wherein the first time indication information is carried on a first system information block (SIB).

22. The method of claim 21, wherein the first SIB comprises an SIB19.

23. The method of any one of claims 15 to 22, wherein the first beam footprint is a non-edge beam footprint, the non-edge beam footprint is separated by at least one beam footprint from at least one neighboring cell of the first cell, and/or the non-edge beam footprint is adjacent to a source cell.

24. The method of any one of claims 15 to 23, wherein the first neighboring cell configuration information is carried on a second SIB.

25. The method of claim 24, wherein the second SIB comprises at least one of an SIB2, an SIB3, an SIB4, an SIB5 or the SIB19.

26. The method of claim 25, wherein
the SIB2 comprises cell reselection related information related to a first neighboring cell, and the first neighboring cell is a neighboring cell that has an adjacent relationship with the first beam footprint among the neighboring cells of the first cell, or at least one neighboring cell of the first cell;
the SIB3 comprises intra-frequency cell reselection information related to the first neighboring cell;
the SIB4 comprises inter-frequency cell reselection information related to the first neighboring cell;
the SIB5 comprises inter-system cell reselection information related to the first neighboring cell; and
the SIB 19 comprises information related to at least one of a non-terrestrial network (NTN) serving cell or a satellite cell in the first neighboring cell.

27. The method of any one of claims 15 to 26, further comprising:
receiving second neighboring cell configuration information of the first cell sent by the network device in a case where the terminal is in the edge beam footprint, wherein the second neighboring cell configuration information is used for the terminal to perform the neighboring cell measurement, and the edge beam footprint is within the first cell and adjacent to at least one neighboring cell of the first cell.

28. The method of claim 27, further comprising:
receiving second time indication information sent by the network device in a case where the terminal is in the edge beam footprint, wherein the second time indication information indicates a service end time of the first cell for a second beam footprint.

29. An apparatus for transmitting information, applied to a network device, comprising:
a transceiver module configured to send first time indication information to a terminal in a first beam footprint, wherein the first time indication information indicates time information for the terminal to receive first neighboring cell configuration information of a first cell, the first beam footprint is within the first cell, and the first neighboring cell configuration information is used for the terminal to perform a neighboring cell measurement.

30. An apparatus for transmitting information, applied to a terminal, comprising:
a transceiver module configured to receive first time indication information sent by a network device, wherein the first time indication information indicates time information for the terminal to receive first neighboring cell configuration information of a first cell, and the terminal is in a first beam footprint within the first cell.

31. A communication device, comprising:
a memory,
a processor, and
a computer program stored on the memory and executable on the processor, wherein the processor, when executing the computer program, implements the method of any one of claims 1 to 14, or implements the method of any one of claims 15 to 28.

32. A communication system, comprising a network device configured to perform the method of any one of claims 1 to 14 and a terminal configured to perform the method of any one of claims 15 to 28.

33. A chip, comprising one or more interface circuits and one or more processors, wherein the interface circuit is configured to receive a signal from a memory of a communication device and send the signal received to the processor, and the signal received comprises computer instructions stored in the memory that, when executed by the processor, enable the communication device to perform the method of any one of claims 1 to 14, or to perform the method of any one of claims 15 to 28.

34. A computer-readable storage medium having stored therein computer-executable instructions that, when executed by a processor, implement the method of any one of claims 1 to 14, or implement the method of any one of claims 15 to 28.

35. A computer program product, comprising a computer program that, when executed by a processor, implements the method of any one of claims 1 to 14, or implements the method of any one of claims 15 to 28.
